# EUROPEAN PATENT APPLICATION

(11) **EP 4 277 307 A1**
(43) Date of publication of application: **15.11.2023**
(21) Application number: 22736643.2
(22) Date of filing: 11.01.2022
(51) Int. Cl.: H04W 4/06

(54) **TRANSMISSION METHOD AND APPARATUS FOR SERVICE, DEVICE, TERMINAL, AND STORAGE MEDIUM**

(30) Priority: 11.01.2021 CN 202110029335
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHAI, Li, Beijing 100053 (CN)
(74) Representative: GPI Brevets
(86) International application number: PCT/CN2022/071443
(87) International publication number: WO 2022/148482

(57) **Abstract**

Embodiments of the present disclosure provide a service transmission method, a service transmission apparatus, a service transmission device, a terminal, and a storage medium, the method includes: receiving, on the basis of packet data convergence protocol (PDCP) entity configured for a broadcast/multicast service, data corresponding to at least one quality of service (QoS) flow of the broadcast/multicast service; transmitting, through a multicast channel corresponding to the PDCP entity, data corresponding to at least one QoS flow to a plurality of target terminals, and/or transmitting, through a unicast channel corresponding to the PDCP entity, data corresponding to the at least one QoS flow to one target terminal.

## Description

### CROSS REFERENCE OF RELATED APPLICATION

The present application claims a priority of Chinese patent application No. 202110029335.6 filed on January 11, 2021, the content of which is incorporated herein by reference in its entirety.

### TECHNICAL FIELD

The present disclosure relates to the field of communications technology, and in particular to a service transmission method, a service transmission apparatus, a service transmission device, a terminal, and a storage medium.

### BACKGROUND

In the long term evolution (Long Term Evolution, LTE) system, the multimedia broadcast multicast service single frequency network (Multimedia Broadcast Multicast Service Single Frequency Network, MBSFN) is used to transmit the multimedia broadcast multicast service (Multimedia Broadcast Multicast Service, MBMS), the MBMS service is a point-to-multipoint service, such as mobile TV, etc., MBSFN service transmission requires the evolved base stations (evolved NodeB, eNB) of multiple cells in a certain MBSFN area (MBSFN Area) to transmit the same data at the same time, so that user equipment (User Equipment, UE) will not suffer inter-cell interference when adjacent cells transmit data, but will also benefit from the superposition of signals from multiple cells. UE receives and combines signals from multiple eNBs, which can improve the signal-to-noise ratio and effectively improve transmission efficiency of MBMS service. In the current LTE technology, an MBMS-capable UE is only required to support receiving only one MBMS service at a time point. Existing technologies do not support user feedback data and retransmission for unicast and multicast/broadcast services.

### SUMMARY

An embodiment of the present disclosure provides a service transmission method, a service transmission apparatus, a service transmission device, a terminal, and a storage medium, which can quickly and effectively utilize the unicast link retransmission.

In order to solve the above-mentioned technical problems, an embodiment of the present disclosure provides the following solutions:
a service transmission method, applied to a network device, where the method includes:
receiving, on the basis of packet data convergence protocol (PDCP) entity configured for a broadcast/multicast service, data corresponding to at least one quality of service (QoS) flow of the broadcast/multicast service;
transmitting, through a multicast channel corresponding to the PDCP entity, data corresponding to at least one QoS flow to a plurality of target terminals, and/or transmitting, through a unicast channel corresponding to the PDCP entity, data corresponding to the at least one QoS flow to one target terminal.

Optionally, the service transmission method further comprises: sending, by medium access control (MAC) entity, in a case that the network device receives NACK feedback corresponding to first data on the multicast channel of a terminal or does not receive the feedback corresponding to the first data on the multicast channel of the terminal, retransmitted data to the target terminal through the unicast channel, where the first data includes at least one MAC PDU.

Optionally, the multicast channel includes: a first radio link control (RLC) entity, a first MAC entity, and a first physical layer (PHY) entity;
the transmitting, through the multicast channel corresponding to the PDCP entity, data corresponding to at least one QoS flow to the plurality of target terminals comprises:
transmitting, through the first RLC entity, the first MAC entity, and the first physical layer (PHY) entity in sequence, data corresponding to at least one QoS flow to the plurality of target terminals.

Optionally, the unicast channel includes: a second radio link control (RLC) entity, a second MAC entity, and a second physical layer (PHY) entity;
the transmitting, through the unicast channel corresponding to the PDCP entity, data corresponding to at least one QoS flow to one target terminal includes:
transmitting, through the second RLC entity, the second MAC entity, and the second physical layer (PHY) entity in sequence, data corresponding to at least one QoS flow to one target terminal.

Optionally, the first MAC entity and the second MAC entity share one MAC entity.

Optionally, the sending, by medium access control (MAC) entity, retransmitted data to the target terminal through the unicast channel, includes at least one of the following:
sending, by the first MAC entity, the first data that needs to be retransmitted to the second MAC entity, and sending, through the second MAC entity and the second PHY entity, the first data to the target terminal;
sending, by the first MAC entity, feedback information to the first RLC entity, or triggering, by the first RLC entity, the PDCP entity to send the second data to the second RLC entity through F1 interface signaling or F1 control data frame, and sending, through the second MAC entity and the second PHY entity, the second data to the target terminal, where the second data is an RLC SDU corresponding to the first data that needs to be retransmitted, or the second data is the first data that needs to be retransmitted, or the second data is an RLC SDU multiplexed with other data, or, the second data is an RLC SDU in which a plurality of RLC SDUs corresponding to the first data are segmented;
sending, by the first MAC entity, the feedback information to the first RLC entity, or triggering, by the first RLC layer, the PDCP entity to send the second data to the second RLC entity, and sending, through the second MAC entity and the second PHY entity, the second data to the target terminal, where the second data is an RLC SDU corresponding to the first data that needs to be retransmitted, or the second data is an RLC SDU multiplexed with other data, or, the second data is an RLC SDU in which a plurality of RLC SDUs corresponding to the first data are segmented;
transmitting transparently, by the first MAC entity, the first data that needs to be retransmitted to the second MAC entity through the first RLC entity and the PDCP entity, and sending, through the second PHY entity, the first data that needs to be retransmitted to the target terminal.

Optionally, in a case that the first MAC entity sends the first data that needs to be retransmitted to the second MAC entity, the method further includes: sending, by the first MAC entity, HARQ process information used by the first data last time to the second MAC entity.

Optionally, the sending, by the first MAC entity, the feedback information to the first RLC entity, or triggering, by the first RLC layer, the PDCP entity to send the second data to the second RLC entity, and sending, through the second MAC entity and the second PHY entity, the second data to the target terminal, further includes:
sending, by the first MAC entity, the first data that needs to be retransmitted and HARQ process information used for the last sending of the first data to the first RLC entity, and forwarding, by the first RLC entity, the first data that needs to be retransmitted and HARQ process information used for the last sending of the first data to the PDCP entity, and forwarding, through the PDCP entity, the first data that needs to be retransmitted and HARQ process information used for the last sending of the first data to the second RLC entity, and sending, by the second PHY entity, the second data and the HARQ process used for the last sending of the first data to the target terminal through the second MAC entity, where the second data is the first data that needs to be retransmitted.

Optionally, the F1 interface signaling or the F1 control data frame includes:
a sequence number field of PDCP packet data unit (PDU) of the retransmitted data; or,
a start sequence number of the PDCP packet data unit (PDU) of the retransmission data, a quantity of PDUs included in the retransmitted data, a start sequence number of MAC service data unit (SDU) of the retransmitted data, and a quantity of SDUs included in the retransmitted data.

Optionally, the service transmission method further includes: in a case that the RLC entity of the multicast channel PTM is in AM mode, if a negative acknowledgment or/and positive acknowledgment for an RLC SDU or RLC SDU segment is received, the negative acknowledgment or/and positive acknowledgment is indicated by a state PDU from an AM RLC entity at a peer layer, the state PDU includes a payload.

Optionally, the state PDU indication further includes: indication information configured for distinguishing terminals, where the indication information configured for distinguishing terminals is related to at least one of the following information: cell radio network temporary identifier (C-RNTI) of the terminal, a truncated C-RNTI of the terminal, recovery identification information of the terminal, truncated recovery identification information of the terminal, and a temporary mobile user identification code TMSI of the terminal, an offset configured by a network side device, and a unique index of the terminal in the group.

Optionally, the service transmission method further includes: triggering, if it is a negative acknowledgment, a network to establish a unicast channel for the terminal, and retransmitting the data that failed to be sent identified in the state PDU.

Optionally, the state PDU does not carry terminal information;
the network device uses a second RNTI to scramble the data that needs to be retransmitted, and sends the data that needs to be retransmitted on the PTM; or:
the network device uses a second logical channel corresponding to a fourth RLC entity to bear the data corresponding to RLC SDU that needs to be retransmitted, and sends the data corresponding to RLC SDU that needs to be retransmitted on the PTM channel; where the fourth RLC entity and the second RLC entity maintain a set of numbers; or: the network device uses the second logical channel corresponding to the fourth RLC entity to bear the data corresponding to the RLC SDU that needs to be retransmitted, and sends the data corresponding to the RLC SDU that needs to be retransmitted on the PTM channel; where the fourth RLC entity and the second RLC entity share a data cache and maintain a set of numbers and a receiving window.

Optionally, the service transmission method further includes:
deeming, by a sending side of the AM RLC entity, after receiving the negative acknowledgment information of the RLC SDU or RLC SDU segment carried in the state PDU from the AM RLC entity at the peer layer, that RLC SDU or RLC SDU Segment of the negative acknowledgment will be prepared for retransmission subsequently, checking, by the sending side of the AM RLC entity, whether the state variable RETX_COUNT of the RLC SDU has an assignment and the assignment is smaller than maxRetxThreshold, if so, no operation, indicating that the retransmission of the data is in progress;
setting, if there is no assignment, the assignment of RETX_COUNT as 0, starting retransmission, and increasing RETX_COUNT by 1 when starting retransmission each time.

Optionally, the service transmission method further includes: deeming, by the sending side of the AM RLC entity, after receiving the negative acknowledgment information of the RLC SDU or RLC SDU segment carried in the state PDU from the AM RLC entity at the peer layer, that RLC SDU or RLC SDU Segment of the negative acknowledgment will be prepared for retransmission subsequently, setting, by the AM RLC entity, a state variable RETX_COUNT-m corresponding to the RLC SDU and the state PDU, setting an assignment of RETX_COUNT-m as 0, and starting retransmission, and increasing RETX_COUNT-m by 1 when starting retransmission each time, where the state variable RETX_COUNT-m corresponds to a maxRetxThreshold-m, and the maximum retransmission value of all RETX_COUNT of the RLC SDU does not exceed maxRetxThreshold-total.

Optionally, the service transmission method further includes: determining, according to whether a logical channel and/or HARQ process corresponding to radio resource control RLC PDU is configured with enabling or disabling of HARQ feedback and/or retransmission, whether to start HARQ feedback and/or retransmission of data that fails to be sent.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, where m is an integer greater than 1, and one MAC PDU includes a plurality of cascaded RLC PDUs;
starting, in a case that the logical channel LCH corresponding to more than or equal to m RLC PDUs in the MAC PDU is configured with data retransmission enabling, the retransmission of the data that failed to be sent, where m is an integer greater than 1, and one MAC PDU includes the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes:
sending, by an RLC entity, in a case that one RLC SDU is divided into at least two RLC PDUs for transmission, a notification message to a MAC entity, where the notification message is configured to indicate that at least two RLC PDUs belong to one RLC SDU.

Optionally, the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, includes:
notifying, by the network device, the terminal of characteristic for enabling or disabling of HARQ feedback and/or data retransmission of the configured logical channel and/or HARQ process through RRC signaling and/or MAC CE.

Optionally, the characteristic for enabling or disabling of HARQ feedback and/or data retransmission of the configured logical channel and/or HARQ process includes:
time information for enabling or disabling of HARQ feedback and/or data retransmission of the configured logical channel and/or HARQ process, where the time information includes duration time, start time and/or end time.

An embodiment of the present disclosure also provides a service transmission method, applied to a terminal, where the method includes:
determining, according to whether a logical channel and/or HARQ process corresponding to radio resource control RLC PDU is configured with enabling or disabling of HARQ feedback and/or retransmission, whether to start HARQ feedback and/or retransmission of data that fails to be sent.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, where m is an integer greater than 1, and one MAC PDU includes a plurality of cascaded RLC PDUs;
starting, in a case that the logical channel LCH corresponding to more than or equal to m RLC PDUs in the MAC PDU is configured with data retransmission enabling, the retransmission of the data that failed to be sent, where m is an integer greater than 1, and one MAC PDU includes the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes:
sending, by an RLC entity, in a case that one RLC SDU is divided into at least two RLC PDUs for transmission, a notification message to a MAC entity, where the notification message is configured to indicate that at least two RLC PDUs belong to one RLC SDU.

Optionally, the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, includes:
notifying, by the network device, the terminal of characteristic for enabling or disabling of HARQ feedback and/or data retransmission of the configured logical channel and/or HARQ process through RRC signaling and/or MAC CE.

Optionally, the characteristic for enabling or disabling of HARQ feedback and/or data retransmission of the configured logical channel and/or HARQ process includes:
time information for enabling or disabling of HARQ feedback and/or data retransmission of the configured logical channel and/or HARQ process, where the time information includes duration time, start time and/or end time.

An embodiment of the present disclosure also provides a service transmission method, applied to a network device, where the method includes:
determining, according to whether a logical channel and/or HARQ process corresponding to the radio resource control RLC PDU is configured with enabling or disabling of HARQ feedback and/or retransmission, whether to start HARQ feedback and/or retransmission of data that fails to be sent.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, where m is an integer greater than 1, and one MAC PDU includes a plurality of cascaded RLC PDUs;
starting, in a case that the logical channel LCH corresponding to more than or equal to m RLC PDUs in the MAC PDU is configured with data retransmission enabling, the retransmission of the data that failed to be sent, where m is an integer greater than 1, and one MAC PDU includes the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes:
sending, by an RLC entity, in a case that one RLC SDU is divided into at least two RLC PDUs for transmission, a notification message to a MAC entity, where the notification message is configured to indicate that at least two RLC PDUs belong to one RLC SDU.

Optionally, the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, includes:
notifying, by the network device, the terminal of characteristic for enabling or disabling of HARQ feedback and/or data retransmission of the configured logical channel and/or HARQ process through RRC signaling and/or MAC CE.

Optionally, the characteristic for enabling or disabling of HARQ feedback and/or data retransmission of the configured logical channel and/or HARQ process includes:
time information for enabling or disabling of HARQ feedback and/or data retransmission of the configured logical channel and/or HARQ process, where the time information includes duration time, start time and/or end time.

An embodiment of the present disclosure also provides a service transmission method, applied to a terminal, where the method includes:
receiving, through a multicast channel or a unicast channel, data sent by a network device;
parsing the data through a PDCP entity to obtain the parsed data, where the multicast channel and the unicast channel correspond to the same PDCP entity, and the PDCP entity is a PDCP entity configured for a broadcast/multicast service.

Optionally, the service transmission method further includes:
receiving, through the unicast channel, retransmission data sent by a media access control (MAC) entity of the network device through a physical layer (PHY) entity.

Optionally, the multicast channel includes: a first radio link control (RLC) entity, a first MAC entity and a first physical layer (PHY) entity.

Optionally, the unicast channel includes: a second radio link control (RLC) entity, a second MAC entity and a second physical layer (PHY) entity.

Optionally, the first MAC entity and the second MAC entity share one MAC entity.

Optionally, the receiving, through the unicast channel, retransmission data sent by the media access control (MAC) entity of the network device through the physical layer (PHY) entity includes:
receiving, through the second PHY entity and the second MAC entity, the retransmission data sent by the network device.

Optionally, the service transmission method further includes: determining, in a case that the terminal is configured with HARQ feedback enabling or disabling, whether to start retransmission of lost data according to HARQ feedback enabling or disabling configuration corresponding to radio resource control RLC PDU and scheduling of the network device.

Optionally, the determining whether to start retransmission of lost data according to HARQ feedback enabling or disabling configuration corresponding to radio resource control RLC PDU and scheduling of the network device, includes:
not performing, in a case that a logical channel LCH corresponding to one RLC PDU in the MAC PDU is configured with HARQ feedback disabling, a retransmission on the lost data; or,
performing, in a case that the logical channel LCH corresponding to one RLC PDU in the MAC PDU is configured with HARQ feedback enabling, the retransmission on the lost data according to the scheduling of the network device; or,
performing, in a case that the logical channel LCH corresponding to more than or equal to m RLC PDUs in the MAC PDU packet is configured with HARQ feedback enabling, the retransmission on the lost data according to the scheduling of the network device, where m is an integer greater than 1, and one MAC PDU includes a plurality of cascaded RLC PDUs; or,
allowing data of the logical channel LCH whose HARQ feedback is enabled to be multiplexed on one MAC PDU, and multiplexing data of the logical channel LCH whose HARQ feedback is disabled on one MAC PDU.

An embodiment of the present disclosure also provides a service transmission apparatus, applied to a network device, and the apparatus includes:
a transceiving module, configured to receive, on the basis of packet data convergence protocol (PDCP) entity configured for a broadcast/multicast service, data corresponding to at least one quality of service (QoS) flow of the broadcast/multicast service; transmitting, through a multicast channel corresponding to the PDCP entity, data corresponding to at least one QoS flow to a plurality of target terminals, and/or transmitting, through a unicast channel corresponding to the PDCP entity, data corresponding to the at least one QoS flow to one target terminal.

An embodiment of the present disclosure also provides a network device, which includes:
a transceiver, configured to receive, on the basis of packet data convergence protocol (PDCP) entity configured for a broadcast/multicast service, data corresponding to at least one quality of service (QoS) flow of the broadcast/multicast service; transmitting, through a multicast channel corresponding to the PDCP entity, data corresponding to at least one QoS flow to a plurality of target terminals, and/or transmitting, through a unicast channel corresponding to the PDCP entity, data corresponding to the at least one QoS flow to one target terminal.

An embodiment of the present disclosure also provides a service transmission apparatus, applied to a terminal, where the apparatus includes:
a transceiving module, configured to receive, through a multicast channel or a unicast channel, data sent by a network device; and
a processing module, configured to parse the data through a PDCP entity to obtain the parsed data, where the multicast channel and the unicast channel correspond to the same PDCP entity, and the PDCP entity is a PDCP entity configured for a broadcast/multicast service.

An embodiment of the present disclosure also provides a terminal, which includes:
a transceiver, configured to receive, through a multicast channel or a unicast channel, data sent by a network device; and
a processor, configured to parse the data through a PDCP entity to obtain the parsed data, where the multicast channel and the unicast channel correspond to the same PDCP entity, and the PDCP entity is a PDCP entity configured for a broadcast/multicast service.

An embodiment of the present disclosure also provides a communication device, which includes: a processor, a memory storing a computer program, when the computer program is run by the processor, the above-mentioned method is executed.

An embodiment of the present disclosure also provides a computer-readable storage medium, which includes instructions, when the instructions are run on a computer, the computer is enabled to execute the above-mentioned method.

The above-mentioned solutions of the embodiments of the present disclosure at least include the following beneficial effects:

The above-mentioned solution of the embodiments of the present disclosure includes: receiving, on the basis of packet data convergence protocol (PDCP) entity configured for a broadcast/multicast service, a quality of service (QoS) flow of the multicast service; transmitting, through a multicast channel corresponding to the PDCP entity, the QoS flow to a plurality of target terminals, and transmitting, through a unicast channel corresponding to the PDCP, the QoS flow to one target terminal, thereby achieving fast and effective use of unicast links for retransmission.

### BRIEF DESCRIPTION OF THE DRAWINGS

FIG. 1 is a flowchart of a transmission method of a multimedia broadcast multicast service;
FIG. 2 is a schematic view of a protocol architecture of a first multicast service according to an embodiment of the present disclosure;
FIG. 3 is a schematic view of a protocol architecture of a second multicast service according to an embodiment of the present disclosure;
FIG. 4 is a first schematic structural view of a F1 interface in an embodiment of the present disclosure;
FIG. 5 is a second schematic structural view of the F1 interface in an embodiment of the present disclosure; and
FIG. 6 is a block schematic view of a transmission apparatus for multimedia broadcast multicast service according to the present disclosure.

### DETAILED DESCRIPTION

Exemplary embodiments of the present disclosure will be described in more detail below with reference to the drawings. Although exemplary embodiments of the present disclosure are shown in the drawings, it should be understood that the present disclosure may be embodied in various forms and should not be limited to the embodiments set forth herein. Conversely, these embodiments are provided for more thorough understanding of the present disclosure and to fully convey the scope of the present disclosure to those skilled in the art.

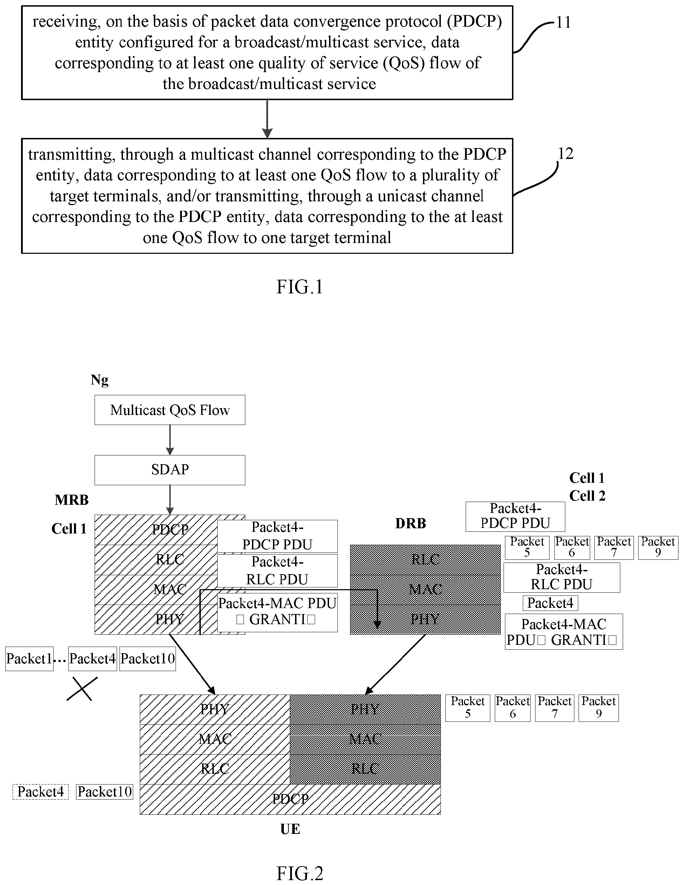

As shown in FIG. 1, an embodiment of the present disclosure provides a service transmission method, which is applied to a network device, where the method includes:
Step 11, receiving, on the basis of packet data convergence protocol (PDCP) entity configured for a broadcast/multicast service, data corresponding to at least one quality of service (QoS) flow of the broadcast/multicast service;
Step 12: transmitting, through a multicast channel corresponding to the PDCP entity, data corresponding to at least one QoS flow to a plurality of target terminals, and/or transmitting, through a unicast channel corresponding to the PDCP entity, data corresponding to the at least one QoS flow to one target terminal.

In this embodiment of the present disclosure, in order to allow the data (or corresponding radio bearer RB, Radio Bearer) corresponding to one broadcast/multicast service (one or more multicast QoS streams) to be flexibly switched between unicast manner and multicast manner, the data (or corresponding radio bearer) corresponding to one multicast service (one or more multicast QoS streams) is configured with a set of PDCP entities, at least two sets of RLCs, MACs and physical entities, which correspond to unicast and multicast channels respectively. That is, when data is sent, a data packet PDCP PDU is on the multicast channel, for example, after being processed by RLC-m, MAC-m and PHY-m, the data is sent to UE in a one-to-many manner; and the same data packet PDCP PDU is on the unicast channel, after being processed by RLC-u, MAC-u and PHY-u, the data is sent to UE in a one-to-one manner, thereby achieving support for fast and effective use of unicast link retransmission.

In an optional embodiment of the present disclosure, the transmission method of the multimedia broadcast multicast service may also include:
step 13, sending, by medium access control (MAC) entity, in a case that the network device receives NACK feedback corresponding to first data on the multicast channel of a terminal or does not receive the feedback corresponding to the first data on the multicast channel of the terminal, retransmitted data to the target terminal through the unicast channel, where the first data includes at least one MAC PDU.

In this embodiment of the present disclosure, in a case that a data packet is lost on the multicast channel, such as packet 4, when retransmitting data packet 4, it does not go through RLC-m to RLC-u, instead, after the MAC layer gets the HARQ feedback, MAC-m directly sends the MAC SDU or MAC PDU of packet 4 to MAC-u, so that the MAC SDU and/or MAC PDU of the retransmitted data packet 4 are respectively processed by the MAC-u and the PHY-u, and retransmitted in a one-to-one manner, thereby achieving support for fast and effective use of unicast link retransmission.

As shown in FIG. 2, in an optional embodiment of the present disclosure, the multicast channel includes: a first radio link control (RLC) entity, a first MAC entity, and a first physical layer (PHY) entity;
the transmitting, through the multicast channel corresponding to the PDCP entity, data corresponding to at least one QoS flow to the plurality of target terminals includes:
transmitting, through the first RLC entity, the first MAC entity, and the first physical layer (PHY) entity in sequence, data corresponding to at least one QoS flow to the plurality of target terminals.

The unicast channel includes: a second radio link control (RLC) entity, a second MAC entity, and a second physical layer (PHY) entity;
the transmitting, through the unicast channel corresponding to the PDCP entity, data corresponding to at least one QoS flow to one target terminal includes:
transmitting, through the second RLC entity, the second MAC entity, and the second physical layer (PHY) entity in sequence, data corresponding to at least one QoS flow to one target terminal.

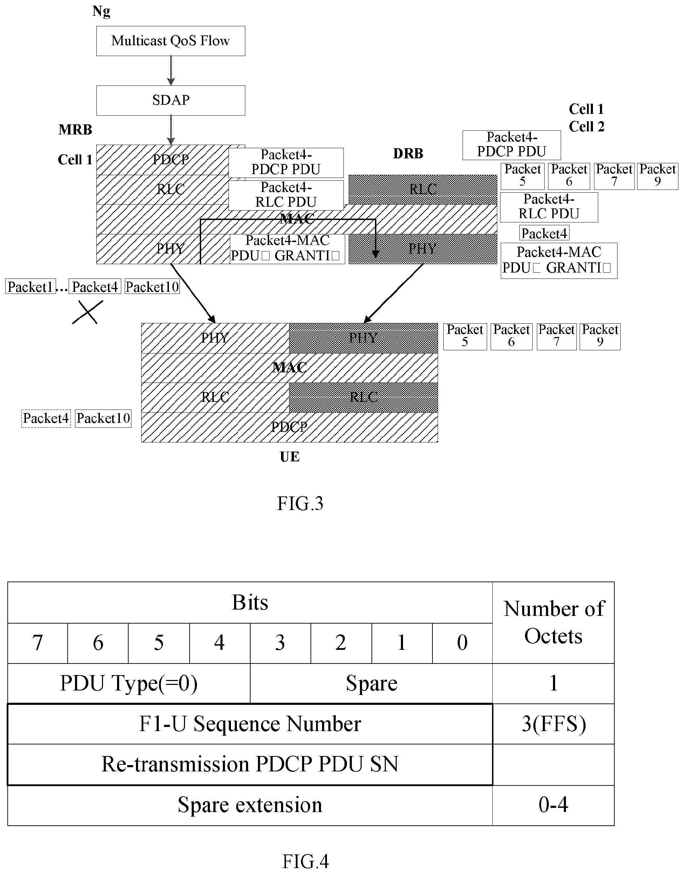

As shown in FIG. 3, in an optional embodiment of the present disclosure, the first MAC entity and the second MAC entity share one MAC entity.

In an optional embodiment of the present disclosure, the sending, by medium access control (MAC) entity, retransmitted data to the target terminal through the unicast channel, comprises at least one of the following:
sending, by the first MAC entity, the first data that needs to be retransmitted to the second MAC entity, and sending, through the second MAC entity and the second PHY entity, the first data to the target terminal;
sending, by the first MAC entity, feedback information to the first RLC entity, or triggering, by the first RLC entity, the PDCP entity to send the second data to the second RLC entity through F1 interface signaling or F1 control data frame, and sending, through the second MAC entity and the second PHY entity, the second data to the target terminal, where the second data is an RLC SDU corresponding to the first data that needs to be retransmitted, or the second data is the first data that needs to be retransmitted, or the second data is an RLC SDU multiplexed with other data, or, the second data is an RLC SDU in which a plurality of RLC SDUs corresponding to the first data are segmented;
sending, by the first MAC entity, the feedback information to the first RLC entity, or triggering, by the first RLC layer, the PDCP entity to send the second data to the second RLC entity, and sending, through the second MAC entity and the second PHY entity, the second data to the target terminal, where the second data is an RLC SDU corresponding to the first data that needs to be retransmitted, or the second data is an RLC SDU multiplexed with other data, or, the second data is an RLC SDU in which a plurality of RLC SDUs corresponding to the first data are segmented;
transmitting transparently, by the first MAC entity, the first data that needs to be retransmitted to the second MAC entity through the first RLC entity and the PDCP entity, and sending, through the second PHY entity, the first data that needs to be retransmitted to the target terminal.

In an optional embodiment of the present disclosure, in a case that the first MAC entity sends the first data that needs to be retransmitted to the second MAC entity, the method further includes:
sending, by the first MAC entity, HARQ process information used by the first data last time to the second MAC entity.

In an optional embodiment of the present disclosure, the sending, by the first MAC entity, the feedback information to the first RLC entity, or triggering, by the first RLC layer, the PDCP entity to send the second data to the second RLC entity, and sending, through the second MAC entity and the second PHY entity, the second data to the target terminal, further includes:
sending, by the first MAC entity, the first data that needs to be retransmitted and HARQ process information used for the last sending of the first data to the first RLC entity, and forwarding, by the first RLC entity, the first data that needs to be retransmitted and HARQ process information used for the last sending of the first data to the PDCP entity, and forwarding, through the PDCP entity, the first data that needs to be retransmitted and HARQ process information used for the last sending of the first data to the second RLC entity, and sending, by the second PHY entity, the second data and the HARQ process used for the last sending of the first data to the target terminal through the second MAC entity, where the second data is the first data that needs to be retransmitted.

As shown in FIG.4, the F1 interface signaling or the F1 control data frame includes:
a sequence number field of PDCP packet data unit (PDU) of the retransmitted data; or,

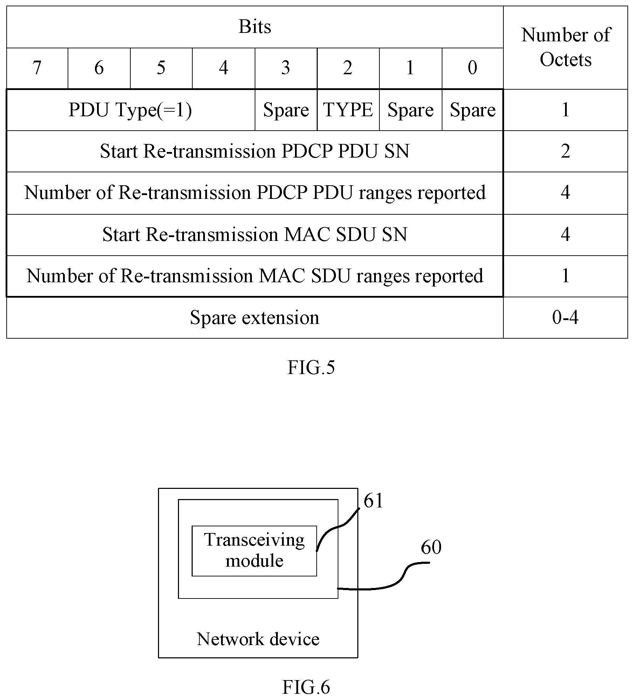

As shown in FIG.5, a start sequence number of the PDCP packet data unit (PDU) of the retransmission data, a quantity of PDUs included in the retransmitted data, a start sequence number of MAC service data unit (SDU) of the retransmitted data, and a quantity of SDUs included in the retransmitted data.

In this embodiment of the present disclosure, in a case that the MAC is in different entities, the MAC needs to inform the RLC layer of the HARQ feedback information through the primitive, or explicit primitive triggers the RLC layer to use the primitive, the F1 interface signaling or the F1 control data frame triggers the PDCP layer to resend the PDCP PDU of packet 4 to RLC-u; here, the F1 interface is the interface between the CU (centralized unit) and the DU (distributed unit), or: the MAC layer transparently transmits the MAC SDU of data packet 4 to MAC-u through RLC-m and PDCP-m, so that the MAC SDU and MAC PDU of retransmitted data packet 4 are processed by MAC-u and PHY-u respectively, and retransmitted in a one-to-one manner.

In an optional embodiment of the present disclosure, the service transmission method further includes:
in a case that the RLC entity of the multicast channel PTM is in AM mode, if a negative acknowledgment or/and positive acknowledgment for an RLC SDU or RLC SDU segment is received (receiving failure notification or/and receiving success notification from AM RLC entity at the peer layer), the negative acknowledgment or/and positive acknowledgment is indicated by a state PDU from an AM RLC entity at a peer layer, the state PDU includes a payload.

In an optional embodiment of the present disclosure, the state PDU indication further includes: indication information configured for distinguishing terminals, where the indication information configured for distinguishing terminals is related to at least one of the following information: cell radio network temporary identifier (C-RNTI) of the terminal, a truncated C-RNTI of the terminal, recovery identification information of the terminal, truncated recovery identification information of the terminal, and a temporary mobile user identification code TMSI of the terminal, an offset configured by a network side device, and a unique index of the terminal in the group.

In an optional embodiment of the present disclosure, the service transmission method further includes:
triggering, if it is a negative acknowledgment, a network to establish a unicast channel for the terminal, and retransmitting the data (all or part of the RLC SDU corresponding to the STATUS PDU) that failed to be sent identified in the state PDU.

In an optional embodiment of the present disclosure, the state PDU does not carry terminal information;
the network device uses a second RNTI to scramble the data that needs to be retransmitted, and sends the data that needs to be retransmitted on the PTM; the UE that receives the data correctly ignores the downlink scheduling data; the UE that has sent a negative acknowledgment receives the retransmitted data, and the UE that receives the data correctly ignores the data of the second logical channel; the UE that has sent the negative acknowledgment receives data in the second logical channel; or:
the network device uses a second logical channel corresponding to a fourth RLC entity to bear the data corresponding to RLC SDU that needs to be retransmitted, and sends the data corresponding to RLC SDU that needs to be retransmitted on the PTM channel; where the fourth RLC entity and the second RLC entity maintain a set of numbers; or:
the network device uses the second logical channel corresponding to the fourth RLC entity to bear the data corresponding to the RLC SDU that needs to be retransmitted, and sends the data corresponding to the RLC SDU that needs to be retransmitted on the PTM channel; where the fourth RLC entity and the second RLC entity share a data cache and maintain a set of numbers and a receiving window.

In an optional embodiment of the present disclosure, the service transmission method further includes:
deeming, by a sending side of the AM RLC entity, after receiving the negative acknowledgment information of the RLC SDU or RLC SDU segment carried in the state PDU from the AM RLC entity at the peer layer, that RLC SDU or RLC SDU Segment of the negative acknowledgment will be prepared for retransmission subsequently, checking, by the sending side of the AM RLC entity, whether the state variable RETX_COUNT of the RLC SDU has an assignment and the assignment is smaller than maxRetxThreshold, if so, no operation, indicating that the retransmission of the data is in progress;
setting, if there is no assignment, the assignment of RETX_COUNT as 0, starting retransmission, and increasing RETX_COUNT by 1 when starting retransmission each time.

In an optional embodiment of the present disclosure, the service transmission method further includes:
deeming, by the sending side of the AM RLC entity, after receiving the negative acknowledgment information of the RLC SDU or RLC SDU segment carried in the state PDU from the AM RLC entity at the peer layer, that RLC SDU or RLC SDU Segment of the negative acknowledgment will be prepared for retransmission subsequently, setting, by the AM RLC entity, a state variable RETX_COUNT-m corresponding to the RLC SDU and the state PDU, setting an assignment of RETX_COUNT-m as 0, and starting retransmission, and increasing RETX_COUNT-m by 1 when starting retransmission each time, where the state variable RETX_COUNT-m corresponds to a maxRetxThreshold-m, and the maximum retransmission value of all RETX_COUNT of the RLC SDU does not exceed maxRetxThreshold-total.

In an optional embodiment of the present disclosure, the transmission method of the multimedia broadcast multicast service may also include:
step 14: determining, according to whether a logical channel and/or HARQ process corresponding to radio resource control RLC PDU is configured with enabling or disabling of HARQ feedback and/or retransmission, whether to start HARQ feedback and/or retransmission of data that fails to be sent.

The specific implementation of the step 14 may include at least one of the following methods:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, where m is an integer greater than 1, and one MAC PDU includes a plurality of cascaded RLC PDUs;
starting, in a case that the logical channel LCH corresponding to more than or equal to m RLC PDUs in the MAC PDU is configured with data retransmission enabling, the retransmission of the data that failed to be sent, where m is an integer greater than 1, and one MAC PDU includes the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

In this embodiment, when the HARQ feedback of some LCHs of the terminal is enabled/disabled, for example, UE1 is configured with two logical channels, LCH1 and LCH2; where the HARQ feedback of LCH1 is enabled, and the HARQ feedback of LCH2 is enabled;
uplink:
Method 1: not scheduling, by the base station, in a case that the LCH corresponding to one RLC PDU in the MAC PDU packet is configured with HARQ feedback disabling, UE to perform HARQ retransmission on this data packet;
Method 2: scheduling, by the base station, in a case that the LCH corresponding to one RLC PDU in the MAC PDU packet is configured with HARQ feedback enabling, UE to perform HARQ retransmission on this data packet;
Method 3: scheduling, by the base station, in a case that the LCH corresponding to more than or equal to m RLC PDUs in the MAC PDU packet is configured with HARQ feedback enabling, UE to perform HARQ retransmission on this data packet (m is an integer greater than 1);
downlink:
Method 1: not starting, by the base station, in a case that the LCH corresponding to one RLC PDU in the MAC PDU packet is configured with HARQ feedback disabling, the HARQ retransmission of this data packet;
Method 2: starting, by the base station, in a case that the LCH corresponding to one RLC PDU in the MAC PDU packet is configured with HARQ feedback enabling, the HARQ retransmission of this data packet;
Method 3: starting, by the base station, in a case that the LCH corresponding to more than or equal to m RLC PDUs in the MAC PDU packet is configured with HARQ feedback enabling, the HARQ retransmission of this data packet (m is an integer greater than 1);
Method 4: for uplink and/or downlink: enhancing the channel multiplexing and selection rules of the base station and UE, and do not allowing the data on the two LCHs with HARQ feedback enabled and HARQ feedback disabled to be multiplexed together; or, allowing the data of the LCH whose HARQ feedback is enabled to be multiplexed on one MAC PDU; multiplexing the data of the LCH whose the HARQ feedback is disabled on one MAC PDU.

Another possible implementation of this step 14 includes:
sending, by an RLC entity, in a case that one RLC SDU is divided into at least two RLC PDUs for transmission, a notification message to a MAC entity, where the notification message is configured to indicate that at least two RLC PDUs belong to one RLC SDU.

In this embodiment, when the HARQ feedback of some HARQ processes is enabled/disabled, one RLC SDU1 of UE1 is segmented into RLC PDU1 and RLC PDU2, and the HARQ feedback of the corresponding HARQ process sent by one RLC PDU is disabled, such as RLC SDU1; and the HARQ feedback of the corresponding HARQ process sent by the other RLC PDU is disabled, such as RLC SDU2;

If the transmission fails, the HARQ feedback of the corresponding HARQ process sent by the RLC SDU is disabled, such as RLC SDU1, can only rely on RLC ARQ feedback and retransmission for data recovery,
and the HARQ feedback of the corresponding HARQ process sent by the RLC SDU is enabled, such as RLC SDU2, can use the HARQ ARQ feedback and retransmission for data recovery; in this way, the two RLC SDUs, such as RLC SDU1 and RLC SDU2, the recovery time intervals of RLC SDU1 and RLC SDU2 are longer, which will result in the timeout of the RLC window;
therefore, in a case that there is a configuration in which HARQ feedback of the HARQ process is enabled/disabled, the RLC layer needs to inform the MAC layer through the primitive whether one or more RLC PDUs belong to one RLC SDU; in addition, when the MAC layer allocates the HARQ process to the MAC PDU, one or more RLC PDUs belonging to one RLC SDU need to be allocated to the same type of HARQ process (the type in which the HARQ feedback is enabled or the type in which the HARQ feedback is disabled). In the above-mentioned embodiments of the present disclosure, when the PDU of the upper layer is transmitted to the lower layer, it is an SDU, for example, when the RLC PDU is transmitted to the MAC layer, it is a MAC SDU.

Another possible implementation of this step 14 includes:
notifying, by the network device, the terminal of characteristic for enabling or disabling of HARQ feedback and/or data retransmission of the configured logical channel and/or HARQ process through RRC signaling and/or MAC CE.

The characteristic for enabling or disabling of HARQ feedback and/or data retransmission of the configured logical channel and/or HARQ process includes:
time information for enabling or disabling of HARQ feedback and/or data retransmission of the configured logical channel and/or HARQ process, where the time information includes duration time, start time and/or end time.

In the above-mentioned embodiment of the present disclosure, a multicast service (a multicast QoS flow) may be flexibly switched between unicast manner and multicast manner, a multicast service (a multicast QoS flow) is configured with a set of PDCP, two sets of RLCs, MACs and physical entities, which correspond to unicast and multicast channels respectively, when retransmitting data packet, it does not go through RLC-m to RLC-u, instead, after the MAC layer gets the HARQ feedback, MAC-m directly sends the MAC SDU of packet 4 to MAC-u, so that the MAC SDU and MAC PDU of the retransmitted data packet 4 are respectively processed by the MAC-u and the PHY-u, and retransmitted in a one-to-one manner, thereby achieving support for fast and effective use of unicast link retransmission.

An embodiment of the present disclosure also provides a service transmission method, which is applied to a media access control MAC entity, where the method includes:
determining, according to whether a logical channel and/or HARQ process corresponding to radio resource control RLC PDU is configured with enabling or disabling of HARQ feedback and/or retransmission, whether to start HARQ feedback and/or retransmission of data that fails to be sent.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, where m is an integer greater than 1, and one MAC PDU includes a plurality of cascaded RLC PDUs;
starting, in a case that the logical channel LCH corresponding to more than or equal to m RLC PDUs in the MAC PDU is configured with data retransmission enabling, the retransmission of the data that failed to be sent, where m is an integer greater than 1, and one MAC PDU includes the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes:
sending, by an RLC entity, in a case that one RLC SDU is divided into at least two RLC PDUs for transmission, a notification message to a MAC entity, where the notification message is configured to indicate that at least two RLC PDUs belong to one RLC SDU.

Optionally, the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, includes:
notifying, by the network device, the terminal of characteristic for enabling or disabling of HARQ feedback and/or data retransmission of the configured logical channel and/or HARQ process through RRC signaling and/or MAC CE.

Optionally, the characteristic for enabling or disabling of HARQ feedback and/or data retransmission of the configured logical channel and/or HARQ process includes:
time information for enabling or disabling of HARQ feedback and/or data retransmission of the configured logical channel and/or HARQ process, where the time information includes duration time, start time and/or end time.

An embodiment of the present disclosure also provides a service transmission method, which is applied to a terminal, where the method includes:
receiving, through a multicast channel or a unicast channel, data sent by a network device;
parsing the data through a PDCP entity to obtain the parsed data, where the multicast channel and the unicast channel correspond to the same PDCP entity, and the PDCP entity is a PDCP entity configured for a multicast service.

Optionally, the transmission method of the multimedia broadcast multicast service also includes:
receiving, through the unicast channel, retransmission data sent by a media access control (MAC) entity of the network device through a physical layer (PHY) entity.

Optionally, the multicast channel includes: a first radio link control (RLC) entity, a first MAC entity and a first physical layer (PHY) entity.

Optionally, the unicast channel includes: a second radio link control (RLC) entity, a second MAC entity and a second physical layer (PHY) entity.

Optionally, the first MAC entity and the second MAC entity share one MAC entity.

Optionally, the receiving, through the unicast channel, retransmission data sent by the media access control (MAC) entity of the network device through the physical layer (PHY) entity includes:
receiving, through the second PHY entity and the second MAC entity, the retransmission data sent by the network device.

Optionally, the transmission method of the multimedia broadcast multicast service also includes:
determining, in a case that the terminal is configured with HARQ feedback enabling or disabling, whether to start retransmission of lost data according to HARQ feedback enabling or disabling configuration corresponding to radio resource control RLC PDU and scheduling of the network device.

Optionally, the determining whether to start retransmission of lost data according to HARQ feedback enabling or disabling configuration corresponding to radio resource control RLC PDU and scheduling of the network device, includes:
not performing, in a case that a logical channel LCH corresponding to one RLC PDU in the MAC PDU is configured with HARQ feedback disabling, a retransmission on the lost data; or,
performing, in a case that the logical channel LCH corresponding to one RLC PDU in the MAC PDU is configured with HARQ feedback enabling, the retransmission on the lost data according to the scheduling of the network device; or,
performing, in a case that the logical channel LCH corresponding to more than or equal to m RLC PDUs in the MAC PDU packet is configured with HARQ feedback enabling, the retransmission on the lost data according to the scheduling of the network device, where m is an integer greater than 1, and one MAC PDU includes a plurality of cascaded RLC PDUs; or,
allowing data of the logical channel LCH whose HARQ feedback is enabled to be multiplexed on one MAC PDU, and multiplexing data of the logical channel LCH whose HARQ feedback is disabled on one MAC PDU.

It should be noted that the method on the terminal corresponds to the above-mentioned method on the network device side, and the above-mentioned method on the network side is also applicable to the terminal, and can also achieve the same technical effect.

As shown in FIG. 6, an embodiment of the present disclosure also provides a multimedia broadcast multicast service transmission apparatus 60, which is applied to a network device, and the apparatus includes:
a transceiving module 61, configured to receive, on the basis of packet data convergence protocol (PDCP) entity configured for a broadcast/multicast service, data corresponding to at least one quality of service (QoS) flow of the broadcast/multicast service; transmitting, through a multicast channel corresponding to the PDCP entity, data corresponding to at least one QoS flow to a plurality of target terminals, and/or transmitting, through a unicast channel corresponding to the PDCP entity, data corresponding to the at least one QoS flow to one target terminal.

Optionally, sending, by medium access control (MAC) entity, in a case that the network device receives NACK feedback corresponding to first data on the multicast channel of a terminal or does not receive the feedback corresponding to the first data on the multicast channel of the terminal, retransmitted data to the target terminal through the unicast channel, where the first data includes at least one MAC PDU.

Optionally, the multicast channel includes: a first radio link control (RLC) entity, a first MAC entity, and a first physical layer (PHY) entity;
the transmitting, through the multicast channel corresponding to the PDCP entity, data corresponding to at least one QoS flow to the plurality of target terminals includes:
transmitting, through the first RLC entity, the first MAC entity, and the first physical layer (PHY) entity in sequence, data corresponding to at least one QoS flow to the plurality of target terminals.

Optionally, the unicast channel includes: a second radio link control (RLC) entity, a second MAC entity, and a second physical layer (PHY) entity;
the transmitting, through the unicast channel corresponding to the PDCP entity, data corresponding to at least one QoS flow to one target terminal includes:
transmitting, through the second RLC entity, the second MAC entity, and the second physical layer (PHY) entity in sequence, data corresponding to at least one QoS flow to one target terminal.

Optionally, the first MAC entity and the second MAC entity share one MAC entity.

Optionally, the sending, by medium access control (MAC) entity, retransmitted data to the target terminal through the unicast channel, includes at least one of the following:
sending, by the first MAC entity, the first data that needs to be retransmitted to the second MAC entity, and sending, through the second MAC entity and the second PHY entity, the first data to the target terminal;
sending, by the first MAC entity, feedback information to the first RLC entity, or triggering, by the first RLC entity, the PDCP entity to send the second data to the second RLC entity through F1 interface signaling or F1 control data frame, and sending, through the second MAC entity and the second PHY entity, the second data to the target terminal, where the second data is an RLC SDU corresponding to the first data that needs to be retransmitted, or the second data is the first data that needs to be retransmitted, or the second data is an RLC SDU multiplexed with other data, or, the second data is an RLC SDU in which a plurality of RLC SDUs corresponding to the first data are segmented;
sending, by the first MAC entity, the feedback information to the first RLC entity, or triggering, by the first RLC layer, the PDCP entity to send the second data to the second RLC entity, and sending, through the second MAC entity and the second PHY entity, the second data to the target terminal, where the second data is an RLC SDU corresponding to the first data that needs to be retransmitted, or the second data is an RLC SDU multiplexed with other data, or, the second data is an RLC SDU in which a plurality of RLC SDUs corresponding to the first data are segmented;
transmitting transparently, by the first MAC entity, the first data that needs to be retransmitted to the second MAC entity through the first RLC entity and the PDCP entity, and sending, through the second PHY entity, the first data that needs to be retransmitted to the target terminal.

Optionally, in a case that the first MAC entity sends the first data that needs to be retransmitted to the second MAC entity, the method further includes:
sending, by the first MAC entity, HARQ process information used by the first data last time to the second MAC entity.

Optionally, the sending, by the first MAC entity, the feedback information to the first RLC entity, or triggering, by the first RLC layer, the PDCP entity to send the second data to the second RLC entity, and sending, through the second MAC entity and the second PHY entity, the second data to the target terminal, further includes:
sending, by the first MAC entity, the first data that needs to be retransmitted and HARQ process information used for the last sending of the first data to the first RLC entity, and forwarding, by the first RLC entity, the first data that needs to be retransmitted and HARQ process information used for the last sending of the first data to the PDCP entity, and forwarding, through the PDCP entity, the first data that needs to be retransmitted and HARQ process information used for the last sending of the first data to the second RLC entity, and sending, by the second PHY entity, the second data and the HARQ process used for the last sending of the first data to the target terminal through the second MAC entity, where the second data is the first data that needs to be retransmitted.

Optionally, the F1 interface signaling or the F1 control data frame includes:
a sequence number field of PDCP packet data unit (PDU) of the retransmitted data; or,
a start sequence number of the PDCP packet data unit (PDU) of the retransmission data, a quantity of PDUs included in the retransmitted data, a start sequence number of MAC service data unit (SDU) of the retransmitted data, and a quantity of SDUs included in the retransmitted data.

Optionally, in a case that the RLC entity of the multicast channel PTM is in AM mode, if a negative acknowledgment or/and positive acknowledgment for an RLC SDU or RLC SDU segment is received, the negative acknowledgment or/and positive acknowledgment is indicated by a state PDU from an AM RLC entity at a peer layer, the state PDU includes a payload.

Optionally, the state PDU indication further includes: indication information configured for distinguishing terminals, where the indication information configured for distinguishing terminals is related to at least one of the following information: cell radio network temporary identifier (C-RNTI) of the terminal, a truncated C-RNTI of the terminal, recovery identification information of the terminal, truncated recovery identification information of the terminal, and a temporary mobile user identification code TMSI of the terminal, an offset configured by a network side device, and a unique index of the terminal in the group.

Optionally, triggering, if it is a negative acknowledgment, a network to establish a unicast channel for the terminal, and retransmitting the data that failed to be sent identified in the state PDU.

Optionally, the state PDU does not carry terminal information;
the network device uses a second RNTI to scramble the data that needs to be retransmitted, and sends the data that needs to be retransmitted on the PTM; or:
the network device uses a second logical channel corresponding to a fourth RLC entity to bear the data corresponding to RLC SDU that needs to be retransmitted, and sends the data corresponding to RLC SDU that needs to be retransmitted on the PTM channel; where the fourth RLC entity and the second RLC entity maintain a set of numbers; or:
the network device uses the second logical channel corresponding to the fourth RLC entity to bear the data corresponding to the RLC SDU that needs to be retransmitted, and sends the data corresponding to the RLC SDU that needs to be retransmitted on the PTM channel; where the fourth RLC entity and the second RLC entity share a data cache and maintain a set of numbers and a receiving window.

Optionally, deeming, by a sending side of the AM RLC entity, after receiving the negative acknowledgment information of the RLC SDU or RLC SDU segment carried in the state PDU from the AM RLC entity at the peer layer, that RLC SDU or RLC SDU Segment of the negative acknowledgment will be prepared for retransmission subsequently, checking, by the sending side of the AM RLC entity, whether the state variable RETX_COUNT of the RLC SDU has an assignment and the assignment is smaller than maxRetxThreshold, if so, no operation, indicating that the retransmission of the data is in progress;
setting, if there is no assignment, the assignment of RETX_COUNT as 0, starting retransmission, and increasing RETX_COUNT by 1 when starting retransmission each time.

Optionally, deeming, by the sending side of the AM RLC entity, after receiving the negative acknowledgment information of the RLC SDU or RLC SDU segment carried in the state PDU from the AM RLC entity at the peer layer, that RLC SDU or RLC SDU Segment of the negative acknowledgment will be prepared for retransmission subsequently, setting, by the AM RLC entity, a state variable RETX_COUNT-m corresponding to the RLC SDU and the state PDU, setting an assignment of RETX_COUNT-m as 0, and starting retransmission, and increasing RETX_COUNT-m by 1 when starting retransmission each time, where the state variable RETX_COUNT-m corresponds to a maxRetxThreshold-m, and the maximum retransmission value of all RETX_COUNT of the RLC SDU does not exceed maxRetxThreshold-total.

Optionally, determining, according to whether a logical channel and/or HARQ process corresponding to radio resource control RLC PDU is configured with enabling or disabling of HARQ feedback and/or retransmission, whether to start HARQ feedback and/or retransmission of data that fails to be sent.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, where m is an integer greater than 1, and one MAC PDU includes a plurality of cascaded RLC PDUs;
starting, in a case that the logical channel LCH corresponding to more than or equal to m RLC PDUs in the MAC PDU is configured with data retransmission enabling, the retransmission of the data that failed to be sent, where m is an integer greater than 1, and one MAC PDU includes the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes:
sending, by an RLC entity, in a case that one RLC SDU is divided into at least two RLC PDUs for transmission, a notification message to a MAC entity, where the notification message is configured to indicate that at least two RLC PDUs belong to one RLC SDU.

Optionally, the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, includes:
notifying, by the network device, the terminal of characteristic for enabling or disabling of HARQ feedback and/or data retransmission of the configured logical channel and/or HARQ process through RRC signaling and/or MAC CE.

Optionally, the characteristic for enabling or disabling of HARQ feedback and/or data retransmission of the configured logical channel and/or HARQ process includes:
time information for enabling or disabling of HARQ feedback and/or data retransmission of the configured logical channel and/or HARQ process, where the time information includes duration time, start time and/or end time.

It should be noted that the apparatus is an apparatus corresponding to the above-mentioned method embodiment, and all the implementation modes in the above-mentioned method embodiments are applicable to the apparatus embodiment, and can also achieve the same technical effect.

An embodiment of the present disclosure provides a service transmission method, which is applied to the terminal, wherein the method includes:
determining, according to whether a logical channel and/or HARQ process corresponding to radio resource control RLC PDU is configured with enabling or disabling of HARQ feedback and/or retransmission, whether to start HARQ feedback and/or retransmission of data that fails to be sent.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, where m is an integer greater than 1, and one MAC PDU includes a plurality of cascaded RLC PDUs;
starting, in a case that the logical channel LCH corresponding to more than or equal to m RLC PDUs in the MAC PDU is configured with data retransmission enabling, the retransmission of the data that failed to be sent, where m is an integer greater than 1, and one MAC PDU includes the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes:
sending, by an RLC entity, in a case that one RLC SDU is divided into at least two RLC PDUs for transmission, a notification message to a MAC entity, where the notification message is configured to indicate that at least two RLC PDUs belong to one RLC SDU.

Optionally, the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, includes:
notifying, by the network device, the terminal of characteristic for enabling or disabling of HARQ feedback and/or data retransmission of the configured logical channel and/or HARQ process through RRC signaling and/or MAC CE.

Optionally, the characteristic for enabling or disabling of HARQ feedback and/or data retransmission of the configured logical channel and/or HARQ process includes:
time information for enabling or disabling of HARQ feedback and/or data retransmission of the configured logical channel and/or HARQ process, where the time information includes duration time, start time and/or end time.

In the embodiment, in a case that there is a configuration in which HARQ feedback of the HARQ process is enabled/disabled, the RLC layer needs to inform the MAC layer through the primitive whether one or more RLC PDUs belong to one RLC SDU; in addition, when the MAC layer allocates the HARQ process to the MAC PDU, one or more RLC PDUs belonging to one RLC SDU need to be allocated to the same type of HARQ process (the type in which the HARQ feedback is enabled or the type in which the HARQ feedback is disabled).

A service transmission method of the present disclosure is applied to a network device, where the method includes:
determining, in a case that the logical channel corresponding to the RLC PDU and/or the enabling or disabling of the HARQ feedback and/or retransmission of the HARQ process of the MAC entity are configured, whether to start HARQ feedback and/or retransmission of data that fails to be sent according to whether a logical channel and/or HARQ process corresponding to the radio resource control RLC PDU is configured with enabling or disabling of HARQ feedback and/or retransmission.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, where m is an integer greater than 1, and one MAC PDU includes a plurality of cascaded RLC PDUs;
starting, in a case that the logical channel LCH corresponding to more than or equal to m RLC PDUs in the MAC PDU is configured with data retransmission enabling, the retransmission of the data that failed to be sent, where m is an integer greater than 1, and one MAC PDU includes the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes:
sending, by an RLC entity, in a case that one RLC SDU is divided into at least two RLC PDUs for transmission, a notification message to a MAC entity, where the notification message is configured to indicate that at least two RLC PDUs belong to one RLC SDU.

Optionally, the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, includes:
notifying, by the network device, the terminal of characteristic for enabling or disabling of HARQ feedback and/or data retransmission of the configured logical channel and/or HARQ process through RRC signaling and/or MAC CE.

Optionally, the characteristic for enabling or disabling of HARQ feedback and/or data retransmission of the configured logical channel and/or HARQ process includes:
time information for enabling or disabling of HARQ feedback and/or data retransmission of the configured logical channel and/or HARQ process, where the time information includes duration time, start time and/or end time.

An embodiment of the present disclosure also provides a network device, which includes:
a transceiver, configured to receive, on the basis of packet data convergence protocol (PDCP) entity configured for a multicast service, data corresponding to at least one quality of service (QoS) flow of the multicast service; transmitting, through a multicast channel corresponding to the PDCP entity, data corresponding to at least one QoS flow to a plurality of target terminals, and/or transmitting, through a unicast channel corresponding to the PDCP entity, data corresponding to the at least one QoS flow to one target terminal.

Optionally, sending, by medium access control (MAC) entity, in a case that the network device receives NACK feedback corresponding to first data on the multicast channel of a terminal or does not receive the feedback corresponding to the first data on the multicast channel of the terminal, retransmitted data to the target terminal through the unicast channel, where the first data includes at least one MAC PDU.

Optionally, the multicast channel includes: a first radio link control (RLC) entity, a first MAC entity, and a first physical layer (PHY) entity;
the transmitting, through the multicast channel corresponding to the PDCP, data corresponding to at least one QoS flow to the plurality of target terminals includes:
transmitting, through the first RLC entity, the first MAC entity, and the first physical layer (PHY) entity in sequence, data corresponding to at least one QoS flow to the plurality of target terminals.

Optionally, the unicast channel includes: a second radio link control (RLC) entity, a second MAC entity, and a second physical layer (PHY) entity;
the transmitting, through the unicast channel corresponding to the PDCP entity, data corresponding to at least one QoS flow to one target terminal includes:
transmitting, through the second RLC entity, the second MAC entity, and the second physical layer (PHY) entity in sequence, data corresponding to at least one QoS flow to one target terminal.

Optionally, the first MAC entity and the second MAC entity share one MAC entity.

Optionally, the sending, by medium access control (MAC) entity, retransmitted data to the target terminal through the unicast channel, includes at least one of the following:
sending, by the first MAC entity, the first data that needs to be retransmitted to the second MAC entity, and sending, through the second MAC entity and the second PHY entity, the first data to the target terminal;
sending, by the first MAC entity, feedback information to the first RLC entity, or triggering, by the first RLC entity, the PDCP entity to send the second data to the second RLC entity through F1 interface signaling or F1 control data frame, and sending, through the second MAC entity and the second PHY entity, the second data to the target terminal, where the second data is an RLC SDU corresponding to the first data that needs to be retransmitted, or the second data is the first data that needs to be retransmitted, or the second data is an RLC SDU multiplexed with other data, or, the second data is an RLC SDU in which a plurality of RLC SDUs corresponding to the first data are segmented;
sending, by the first MAC entity, the feedback information to the first RLC entity, or triggering, by the first RLC layer, the PDCP entity to send the second data to the second RLC entity, and sending, through the second MAC entity and the second PHY entity, the second data to the target terminal, where the second data is an RLC SDU corresponding to the first data that needs to be retransmitted, or the second data is an RLC SDU multiplexed with other data, or, the second data is an RLC SDU in which a plurality of RLC SDUs corresponding to the first data are segmented;
transmitting transparently, by the first MAC entity, the first data that needs to be retransmitted to the second MAC entity through the first RLC entity and the PDCP entity, and sending, through the second PHY entity, the first data that needs to be retransmitted to the target terminal.

Optionally, in a case that the first MAC entity sends the first data that needs to be retransmitted to the second MAC entity, the method further includes:
sending, by the first MAC entity, HARQ process information used by the first data last time to the second MAC entity.

Optionally, the sending, by the first MAC entity, the feedback information to the first RLC entity, or triggering, by the first RLC layer, the PDCP entity to send the second data to the second RLC entity, and sending, through the second MAC entity and the second PHY entity, the second data to the target terminal, further includes:
sending, by the first MAC entity, the first data that needs to be retransmitted and HARQ process information used for the last sending of the first data to the first RLC entity, and forwarding, by the first RLC entity, the first data that needs to be retransmitted and HARQ process information used for the last sending of the first data to the PDCP entity, and forwarding, through the PDCP entity, the first data that needs to be retransmitted and HARQ process information used for the last sending of the first data to the second RLC entity, and sending, by the second PHY entity, the second data and the HARQ process used for the last sending of the first data to the target terminal through the second MAC entity, where the second data is the first data that needs to be retransmitted.

Optionally, the F1 interface signaling or the F1 control data frame includes:
a sequence number field of PDCP packet data unit (PDU) of the retransmitted data; or,
a start sequence number of the PDCP packet data unit (PDU) of the retransmission data, a quantity of PDUs included in the retransmitted data, a start sequence number of MAC service data unit (SDU) of the retransmitted data, and a quantity of SDUs included in the retransmitted data.

Optionally, the service transmission method further includes:
in a case that the RLC entity of the multicast channel PTM is in AM mode, if a negative acknowledgment or/and positive acknowledgment for an RLC SDU or RLC SDU segment is received, the negative acknowledgment or/and positive acknowledgment is indicated by a state PDU from an AM RLC entity at a peer layer, the state PDU includes a payload.

Optionally, the state PDU indication further includes: indication information configured for distinguishing terminals, where the indication information configured for distinguishing terminals is related to at least one of the following information: cell radio network temporary identifier (C-RNTI) of the terminal, a truncated C-RNTI of the terminal, recovery identification information of the terminal, truncated recovery identification information of the terminal, and a temporary mobile user identification code TMSI of the terminal, an offset configured by a network side device, and a unique index of the terminal in the group.

Optionally, the service transmission method further includes:
triggering, if it is a negative acknowledgment, a network to establish a unicast channel for the terminal, and retransmitting the data that failed to be sent identified in the state PDU.

Optionally, the state PDU does not carry terminal information;
the network device uses a second RNTI to scramble the data that needs to be retransmitted, and sends the data that needs to be retransmitted on the PTM; or:
the network device uses a second logical channel corresponding to a fourth RLC entity to bear the data corresponding to RLC SDU that needs to be retransmitted, and sends the data corresponding to RLC SDU that needs to be retransmitted on the PTM channel; where the fourth RLC entity and the second RLC entity maintain a set of numbers; or:
the network device uses the second logical channel corresponding to the fourth RLC entity to bear the data corresponding to the RLC SDU that needs to be retransmitted, and sends the data corresponding to the RLC SDU that needs to be retransmitted on the PTM channel; where the fourth RLC entity and the second RLC entity share a data cache and maintain a set of numbers and a receiving window.

Optionally, the service transmission method further includes:
deeming, by a sending side of the AM RLC entity, after receiving the negative acknowledgment information of the RLC SDU or RLC SDU segment carried in the state PDU from the AM RLC entity at the peer layer, that RLC SDU or RLC SDU Segment of the negative acknowledgment will be prepared for retransmission subsequently, checking, by the sending side of the AM RLC entity, whether the state variable RETX_COUNT of the RLC SDU has an assignment and the assignment is smaller than maxRetxThreshold, if so, no operation, indicating that the retransmission of the data is in progress;
setting, if there is no assignment, the assignment of RETX_COUNT as 0, starting retransmission, and increasing RETX_COUNT by 1 when starting retransmission each time.

Optionally, the service transmission method further includes:
deeming, by the sending side of the AM RLC entity, after receiving the negative acknowledgment information of the RLC SDU or RLC SDU segment carried in the state PDU from the AM RLC entity at the peer layer, that RLC SDU or RLC SDU Segment of the negative acknowledgment will be prepared for retransmission subsequently, setting, by the AM RLC entity, a state variable RETX_COUNT-m corresponding to the RLC SDU and the state PDU, setting an assignment of RETX_COUNT-m as 0, and starting retransmission, and increasing RETX_COUNT-m by 1 when starting retransmission each time, where the state variable RETX_COUNT-m corresponds to a maxRetxThreshold-m, and the maximum retransmission value of all RETX_COUNT of the RLC SDU does not exceed maxRetxThreshold-total.

Optionally, the service transmission method further includes:
determining, according to whether a logical channel and/or HARQ process corresponding to radio resource control RLC PDU is configured with enabling or disabling of HARQ feedback and/or retransmission, whether to start HARQ feedback and/or retransmission of data that fails to be sent.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, where m is an integer greater than 1, and one MAC PDU includes a plurality of cascaded RLC PDUs;
starting, in a case that the logical channel LCH corresponding to more than or equal to m RLC PDUs in the MAC PDU is configured with data retransmission enabling, the retransmission of the data that failed to be sent, where m is an integer greater than 1, and one MAC PDU includes the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

Optionally, the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, includes:
sending, by an RLC entity, in a case that one RLC SDU is divided into at least two RLC PDUs for transmission, a notification message to a MAC entity, where the notification message is configured to indicate that at least two RLC PDUs belong to one RLC SDU.

Optionally, the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, includes:
notifying, by the network device, the terminal of characteristic for enabling or disabling of HARQ feedback and/or data retransmission of the configured logical channel and/or HARQ process through RRC signaling and/or MAC CE.

Optionally, the characteristic for enabling or disabling of HARQ feedback and/or data retransmission of the configured logical channel and/or HARQ process includes:
time information for enabling or disabling of HARQ feedback and/or data retransmission of the configured logical channel and/or HARQ process, where the time information includes duration time, start time and/or end time.

It should be noted that the device is a device corresponding to the above-mentioned method embodiment, and all the implementation manners in the above-mentioned method embodiment are applicable to the device embodiment, and can also achieve the same technical effect.

An embodiment of the present disclosure also provides a service transmission apparatus, applied to a terminal, where the apparatus includes:
a transceiving module, configured to receive, through a multicast channel or a unicast channel, data sent by a network device; and
a processing module, configured to parse the data through a PDCP entity to obtain the parsed data, where the multicast channel and the unicast channel correspond to the same PDCP entity, and the PDCP entity is a PDCP entity configured for a multicast service.
receiving, through a multicast channel or a unicast channel, data sent by a network device;
parsing the data through a PDCP entity to obtain the parsed data, where the multicast channel and the unicast channel correspond to the same PDCP entity, and the PDCP entity is a PDCP entity configured for a multicast service.

Optionally, receiving, through the unicast channel, retransmission data sent by a media access control (MAC) entity of the network device through a physical layer (PHY) entity.

Optionally, the multicast channel includes: a first radio link control (RLC) entity, a first MAC entity and a first physical layer (PHY) entity.

Optionally, the unicast channel includes: a second radio link control (RLC) entity, a second MAC entity and a second physical layer (PHY) entity.

Optionally, the first MAC entity and the second MAC entity share one MAC entity.

Optionally, the receiving, through the unicast channel, retransmission data sent by the media access control (MAC) entity of the network device through the physical layer (PHY) entity includes:
receiving, through the second PHY entity and the second MAC entity, the retransmission data sent by the network device.

Optionally, determining, in a case that the terminal is configured with HARQ feedback enabling or disabling, whether to start retransmission of lost data according to HARQ feedback enabling or disabling configuration corresponding to radio resource control RLC PDU and scheduling of the network device.

Optionally, the determining whether to start retransmission of lost data according to HARQ feedback enabling or disabling configuration corresponding to radio resource control RLC PDU and scheduling of the network device, includes:
not performing, in a case that a logical channel LCH corresponding to one RLC PDU in the MAC PDU is configured with HARQ feedback disabling, a retransmission on the lost data; or,
performing, in a case that the logical channel LCH corresponding to one RLC PDU in the MAC PDU is configured with HARQ feedback enabling, the retransmission on the lost data according to the scheduling of the network device; or,
performing, in a case that the logical channel LCH corresponding to more than or equal to m RLC PDUs in the MAC PDU packet is configured with HARQ feedback enabling, the retransmission on the lost data according to the scheduling of the network device, where m is an integer greater than 1, and one MAC PDU includes a plurality of cascaded RLC PDUs; or,
allowing data of the logical channel LCH whose HARQ feedback is enabled to be multiplexed on one MAC PDU, and multiplexing data of the logical channel LCH whose HARQ feedback is disabled on one MAC PDU.

It should be noted that the apparatus is an apparatus corresponding to the above-mentioned method embodiment, and all the implementation manners in the above-mentioned method embodiment are applicable to the apparatus embodiment, and can also achieve the same technical effect.

An embodiment of the present disclosure also provides a terminal, which includes:
a transceiver, configured to receive, through a multicast channel or a unicast channel, data sent by a network device; and
a processor, configured to parse the data through a PDCP entity to obtain the parsed data, where the multicast channel and the unicast channel correspond to the same PDCP entity, and the PDCP entity is a PDCP entity configured for a multicast service.
receiving, through a multicast channel or a unicast channel, data sent by a network device;
parsing the data through a PDCP entity to obtain the parsed data, where the multicast channel and the unicast channel correspond to the same PDCP entity, and the PDCP entity is a PDCP entity configured for a multicast service.

Optionally, receiving, through the unicast channel, retransmission data sent by a media access control (MAC) entity of the network device through a physical layer (PHY) entity.

Optionally, the multicast channel includes: a first radio link control (RLC) entity, a first MAC entity and a first physical layer (PHY) entity.

Optionally, the unicast channel includes: a second radio link control (RLC) entity, a second MAC entity and a second physical layer (PHY) entity.

Optionally, the first MAC entity and the second MAC entity share one MAC entity.

Optionally, the receiving, through the unicast channel, retransmission data sent by the media access control (MAC) entity of the network device through the physical layer (PHY) entity includes:
receiving, through the second PHY entity and the second MAC entity, the retransmission data sent by the network device.

Optionally, determining, in a case that the terminal is configured with HARQ feedback enabling or disabling, whether to start retransmission of lost data according to HARQ feedback enabling or disabling configuration corresponding to radio resource control RLC PDU and scheduling of the network device.

Optionally, the determining whether to start retransmission of lost data according to HARQ feedback enabling or disabling configuration corresponding to radio resource control RLC PDU and scheduling of the network device, includes:
not performing, in a case that a logical channel LCH corresponding to one RLC PDU in the MAC PDU is configured with HARQ feedback disabling, a retransmission on the lost data; or,
performing, in a case that the logical channel LCH corresponding to one RLC PDU in the MAC PDU is configured with HARQ feedback enabling, the retransmission on the lost data according to the scheduling of the network device; or,
performing, in a case that the logical channel LCH corresponding to more than or equal to m RLC PDUs in the MAC PDU packet is configured with HARQ feedback enabling, the retransmission on the lost data according to the scheduling of the network device, where m is an integer greater than 1, and one MAC PDU includes a plurality of cascaded RLC PDUs; or,
allowing data of the logical channel LCH whose HARQ feedback is enabled to be multiplexed on one MAC PDU, and multiplexing data of the logical channel LCH whose HARQ feedback is disabled on one MAC PDU.

It should be noted that the terminal is a terminal corresponding to the above-mentioned method embodiment, and all the implementation manners in the above-mentioned method embodiment are applicable to the terminal embodiment, and can also achieve the same technical effect.

An embodiment of the present disclosure also provides a communication device, including: a processor, and a memory storing a computer program, and when the computer program is run by the processor, the above-mentioned method is executed. All the implementation manners in the foregoing method embodiments are applicable to this embodiment, and can also achieve the same technical effect.

An embodiment of the present disclosure also provides a computer-readable storage medium, including instructions, when the instructions are run on a computer, the computer is enabled to execute the above-mentioned method. All the implementation manners in the foregoing method embodiments are applicable to this embodiment, and can also achieve the same technical effect.

Those skilled in the art can appreciate that the units and algorithm steps of the examples described in conjunction with the embodiments disclosed herein can be implemented by electronic hardware, or a combination of computer software and electronic hardware. Whether these functions are executed by hardware or software depends on the specific application and design constraints of the technical solution. Those skilled in the art may use different methods to implement the described functions for each specific application, but such implementation should not be regarded as exceeding the scope of the present disclosure.

Those skilled in the art can clearly understand that for the convenience and brevity of the description, the specific working process of the above-described system, apparatus and unit can refer to the corresponding process in the foregoing method embodiment, which will not be repeated here.

In the embodiments provided in the present disclosure, it should be understood that the disclosed apparatuses and methods can be implemented in other ways. For example, the apparatus embodiments described above are only illustrative. For example, the division of the units is only a logical function division. In actual implementation, there may be other division methods. For example, multiple units or components may be combined or may be integrated into another system, or some features may be ignored, or not executed. In another point, the mutual coupling or direct coupling or communication connection shown or discussed may be achieved through some interfaces, and the indirect coupling or communication connection of apparatuses or units may be in electrical, mechanical or other forms.

The units described as separate components may or may not be physically separated, and the components shown as units may or may not be physical units, that is, they may be located in one place, or may be distributed to multiple network units. Part or all of the units can be selected according to actual needs to achieve the purpose of the solution of this embodiment.

In addition, each functional unit in each embodiment of the present disclosure may be integrated into one processing unit, each unit may exist separately physically, or two or more units may be integrated into one unit.

If the functions described above are realized in the form of software function units and sold or used as independent products, they can be stored in a computer-readable storage medium. Based on this understanding, the essence of the technical solution of the present disclosure or the part that contributes to the prior art or the part of the technical solution can be embodied in the form of a software product, and the computer software product is stored in a storage medium, including several instructions are used to enable a computer device (which may be a personal computer, a server, or a network device, etc.) to execute all or part of the steps of the methods described in various embodiments of the present disclosure. The aforementioned storage medium includes: various media capable of storing program codes such as U disk, mobile hard disk, ROM, RAM, magnetic disk or optical disk.

In addition, it should be pointed out that in the apparatus and method of the present disclosure, obviously, each component or each step can be decomposed and/or reassembled. These decompositions and/or recombinations should be considered equivalents of the present disclosure. Also, the steps for executing the above-mentioned series of processes can naturally be executed in chronological order according to the illustrated order, but it is not necessary to be executed in chronological order, and some steps can be executed in parallel or independently of each other. For those ordinarily skilled in the art, it can be understood that all or any steps or components of the method and apparatus of the present disclosure can be implemented in any computing apparatus (including a processor, storage medium, etc.) or a network of computing devices with hardware or firmware, software or a combination thereof, which can be realized by those ordinarily skilled in the art using their basic programming skills after reading the description of the present disclosure.

Therefore, the object of the present disclosure can also be achieved by running a program or a group of programs on any computing apparatus. The computing apparatus may be a known general-purpose apparatus. Therefore, the object of the present disclosure can also be realized only by providing a program product including program codes for realizing the method or apparatus. That is, such a program product also constitutes the present disclosure, and a storage medium storing such a program product also constitutes the present disclosure. Obviously, the storage medium may be any known storage medium or any storage medium developed in the future. It should also be pointed out that in the apparatus and method of the present disclosure, obviously, each component or each step can be decomposed and/or reassembled. These decompositions and/or recombinations should be considered equivalents of the present disclosure. Also, the steps for performing the above-mentioned series of processes may naturally be executed in chronological order according to the order described, but need not necessarily be executed in chronological order. Certain steps may be performed in parallel or independently of each other.

The above description is a preferred embodiment of the present disclosure, it should be pointed out that for those ordinarily skilled in the art, without departing from the principle of the present disclosure, some improvements and modifications can also be made, and these improvements and modifications should also be regarded as the protection scope of the present disclosure.

## Claims

1. A service transmission method, applied to a network device, wherein the method comprises:
receiving, on the basis of packet data convergence protocol (PDCP) entity configured for a broadcast/multicast service, data corresponding to at least one quality of service (QoS) flow of the broadcast/multicast service;
transmitting, through a multicast channel corresponding to the PDCP entity, data corresponding to at least one QoS flow to a plurality of target terminals, and/or transmitting, through a unicast channel corresponding to the PDCP entity, data corresponding to the at least one QoS flow to one target terminal.

2. The service transmission method according to claim 1, wherein the method further comprises:
sending, by medium access control (MAC) entity, in a case that the network device receives NACK feedback corresponding to first data on the multicast channel of a terminal or does not receive the feedback corresponding to the first data on the multicast channel of the terminal, retransmitted data to the target terminal through the unicast channel, wherein the first data comprises at least one MAC PDU.

3. The service transmission method according to claim 2, wherein the multicast channel comprises: a first radio link control (RLC) entity, a first MAC entity, and a first physical layer (PHY) entity;
the transmitting, through the multicast channel corresponding to the PDCP entity, data corresponding to at least one QoS flow to the plurality of target terminals comprises:
transmitting, through the first RLC entity, the first MAC entity, and the first physical layer (PHY) entity in sequence, data corresponding to at least one QoS flow to the plurality of target terminals.

4. The service transmission method according to claim 3, wherein the unicast channel comprises: a second radio link control (RLC) entity, a second MAC entity, and a second physical layer (PHY) entity;
the transmitting, through the unicast channel corresponding to the PDCP entity, data corresponding to at least one QoS flow to one target terminal comprises:
transmitting, through the second RLC entity, the second MAC entity, and the second physical layer (PHY) entity in sequence, data corresponding to at least one QoS flow to one target terminal.

5. The service transmission method according to claim 4, wherein the first MAC entity and the second MAC entity share one MAC entity.

6. The service transmission method according to claim 4 or 5, wherein the sending, by medium access control (MAC) entity, retransmitted data to the target terminal through the unicast channel, comprises at least one of the following:
sending, by the first MAC entity, the first data that needs to be retransmitted to the second MAC entity, and sending, through the second MAC entity and the second PHY entity, the first data to the target terminal;
sending, by the first MAC entity, feedback information to the first RLC entity, or triggering, by the first RLC entity, the PDCP entity to send the second data to the second RLC entity through F1 interface signaling or F1 control data frame, and sending, through the second MAC entity and the second PHY entity, the second data to the target terminal, wherein the second data is an RLC SDU corresponding to the first data that needs to be retransmitted, or the second data is the first data that needs to be retransmitted, or the second data is an RLC SDU multiplexed with other data, or, the second data is an RLC SDU in which a plurality of RLC SDUs corresponding to the first data are segmented;
sending, by the first MAC entity, the feedback information to the first RLC entity, or triggering, by the first RLC layer, the PDCP entity to send the second data to the second RLC entity, and sending, through the second MAC entity and the second PHY entity, the second data to the target terminal, wherein the second data is an RLC SDU corresponding to the first data that needs to be retransmitted, or the second data is an RLC SDU multiplexed with other data, or, the second data is an RLC SDU in which a plurality of RLC SDUs corresponding to the first data are segmented;
transmitting transparently, by the first MAC entity, the first data that needs to be retransmitted to the second MAC entity through the first RLC entity and the PDCP entity, and sending, through the second PHY entity, the first data that needs to be retransmitted to the target terminal.

7. The service transmission method according to claim 6, wherein in a case that the first MAC entity sends the first data that needs to be retransmitted to the second MAC entity, the method further comprises:
sending, by the first MAC entity, HARQ process information used by the first data last time to the second MAC entity.

8. The service transmission method according to claim 6, wherein the sending, by the first MAC entity, the feedback information to the first RLC entity, or triggering, by the first RLC layer, the PDCP entity to send the second data to the second RLC entity, and sending, through the second MAC entity and the second PHY entity, the second data to the target terminal, further comprises:
sending, by the first MAC entity, the first data that needs to be retransmitted and HARQ process information used for the last sending of the first data to the first RLC entity, and forwarding, by the first RLC entity, the first data that needs to be retransmitted and HARQ process information used for the last sending of the first data to the PDCP entity, and forwarding, through the PDCP entity, the first data that needs to be retransmitted and HARQ process information used for the last sending of the first data to the second RLC entity, and sending, by the second PHY entity, the second data and the HARQ process used for the last sending of the first data to the target terminal through the second MAC entity, wherein the second data is the first data that needs to be retransmitted.

9. The service transmission method according to claim 6, wherein the F1 interface signaling or the F1 control data frame comprises:
a sequence number field of PDCP packet data unit (PDU) of the retransmitted data; or,
a start sequence number of the PDCP packet data unit (PDU) of the retransmission data, a quantity of PDUs comprised in the retransmitted data, a start sequence number of MAC service data unit (SDU) of the retransmitted data, and a quantity of SDUs comprised in the retransmitted data.

10. The service transmission method according to claim 1, further comprising:
in a case that the RLC entity of the multicast channel PTM is in AM mode, if a negative acknowledgment or/and positive acknowledgment for an RLC SDU or RLC SDU segment is received, the negative acknowledgment or/and positive acknowledgment is indicated by a state PDU from an AM RLC entity at a peer layer, the state PDU comprises a payload.

11. The service transmission method according to claim 10, wherein the state PDU indication further comprises: indication information configured for distinguishing terminals, wherein the indication information configured for distinguishing terminals is related to at least one of the following information:
cell radio network temporary identifier (C-RNTI) of the terminal, a truncated C-RNTI of the terminal, recovery identification information of the terminal, truncated recovery identification information of the terminal, and a temporary mobile user identification code TMSI of the terminal, an offset configured by a network side device, and a unique index of the terminal in the group.

12. The service transmission method according to claim 11, further comprising:
triggering, if it is a negative acknowledgment, a network to establish a unicast channel for the terminal, and retransmitting the data that failed to be sent identified in the state PDU.

13. The service transmission method according to claim 10, wherein the state PDU does not carry terminal information;
the network device uses a second RNTI to scramble the data that needs to be retransmitted, and sends the data that needs to be retransmitted on the PTM; or:
the network device uses a second logical channel corresponding to a fourth RLC entity to bear the data corresponding to RLC SDU that needs to be retransmitted, and sends the data corresponding to RLC SDU that needs to be retransmitted on the PTM channel; wherein the fourth RLC entity and the second RLC entity maintain a set of numbers; or:
the network device uses the second logical channel corresponding to the fourth RLC entity to bear the data corresponding to the RLC SDU that needs to be retransmitted, and sends the data corresponding to the RLC SDU that needs to be retransmitted on the PTM channel; wherein the fourth RLC entity and the second RLC entity share a data cache and maintain a set of numbers and a receiving window.

14. The service transmission method according to claim 10, further comprising:
deeming, by a sending side of the AM RLC entity, after receiving the negative acknowledgment information of the RLC SDU or RLC SDU segment carried in the state PDU from the AM RLC entity at the peer layer, that RLC SDU or RLC SDU Segment of the negative acknowledgment will be prepared for retransmission subsequently, checking, by the sending side of the AM RLC entity, whether the state variable RETX_COUNT of the RLC SDU has an assignment and the assignment is smaller than maxRetxThreshold, if so, no operation, indicating that the retransmission of the data is in progress;
setting, if there is no assignment, the assignment of RETX_COUNT as 0, starting retransmission, and increasing RETX_COUNT by 1 when starting retransmission each time.

15. The service transmission method according to claim 10, further comprising:
deeming, by the sending side of the AM RLC entity, after receiving the negative acknowledgment information of the RLC SDU or RLC SDU segment carried in the state PDU from the AM RLC entity at the peer layer, that RLC SDU or RLC SDU Segment of the negative acknowledgment will be prepared for retransmission subsequently, and setting, by the AM RLC entity, a state variable RETX_COUNT-m corresponding to the RLC SDU and the state PDU, setting an assignment of RETX_COUNT-m as 0, and starting retransmission, and increasing RETX_COUNT-m by 1 when starting retransmission each time, wherein the state variable RETX_COUNT-m corresponds to a maxRetxThreshold-m, and the maximum retransmission value of all RETX_COUNT of the RLC SDU does not exceed maxRetxThreshold-total.

16. The service transmission method according to claim 1, further comprising:
determining, according to whether a logical channel and/or HARQ process corresponding to radio resource control RLC PDU is configured with enabling or disabling of HARQ feedback and/or retransmission, whether to start HARQ feedback and/or retransmission of data that fails to be sent.

17. The service transmission method according to claim 16, wherein the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, comprises at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, wherein m is an integer greater than 1, and one MAC PDU comprises a plurality of cascaded RLC PDUs;
starting, in a case that the logical channel LCH corresponding to more than or equal to m RLC PDUs in the MAC PDU is configured with data retransmission enabling, the retransmission of the data that failed to be sent, wherein m is an integer greater than 1, and one MAC PDU comprises the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

18. The service transmission method according to claim 16, wherein the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, comprises:
sending, by an RLC entity, in a case that one RLC SDU is divided into at least two RLC PDUs for transmission, a notification message to a MAC entity, wherein the notification message is configured to indicate that at least two RLC PDUs belong to one RLC SDU.

19. The service transmission method according to claim 16, wherein the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, comprises:
notifying, by the network device, the terminal of characteristic for enabling or disabling of HARQ feedback and/or data retransmission of the configured logical channel and/or HARQ process through RRC signaling and/or MAC CE.

20. The service transmission method according to claim 19, wherein the characteristic for enabling or disabling of HARQ feedback and/or data retransmission of the configured logical channel and/or HARQ process comprises:
time information for enabling or disabling of HARQ feedback and/or data retransmission of the configured logical channel and/or HARQ process, wherein the time information comprises duration time, start time and/or end time.

21. A service transmission method, applied to a terminal, wherein the method comprises:
determining, according to whether a logical channel and/or HARQ process corresponding to radio resource control RLC PDU is configured with enabling or disabling of HARQ feedback and/or retransmission, whether to start HARQ feedback and/or retransmission of data that fails to be sent.

22. The service transmission method according to claim 21, wherein the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, comprises at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, wherein m is an integer greater than 1, and one MAC PDU comprises a plurality of cascaded RLC PDUs;
starting, in a case that the logical channel LCH corresponding to more than or equal to m RLC PDUs in the MAC PDU is configured with data retransmission enabling, the retransmission of the data that failed to be sent, wherein m is an integer greater than 1, and one MAC PDU comprises the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

23. The service transmission method according to claim 21, wherein the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, comprises:
sending, by an RLC entity, in a case that one RLC SDU is divided into at least two RLC PDUs for transmission, a notification message to a MAC entity, wherein the notification message is configured to indicate that at least two RLC PDUs belong to one RLC SDU.

24. The service transmission method according to claim 21, wherein the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, comprises:
notifying, by the network device, the terminal of characteristic for enabling or disabling of HARQ feedback and/or data retransmission of the configured logical channel and/or HARQ process through RRC signaling and/or MAC CE.

25. The service transmission method according to claim 24, wherein the characteristic for enabling or disabling of HARQ feedback and/or data retransmission of the configured logical channel and/or HARQ process comprises:
time information for enabling or disabling of HARQ feedback and/or data retransmission of the configured logical channel and/or HARQ process, wherein the time information comprises duration time, start time and/or end time.

26. A service transmission method, applied to a network device, wherein the method comprises:
determining, according to whether a logical channel and/or HARQ process corresponding to radio resource control RLC PDU is configured with enabling or disabling of HARQ feedback and/or retransmission, whether to start HARQ feedback and/or retransmission of data that fails to be sent.

27. The service transmission method according to claim 26, wherein the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, comprises at least one of the following:
not starting the HARQ feedback for received data in a case that a logical channel LCH corresponding to one RLC PDU in the MAC PDU is configured with HARQ feedback disabling;
not starting the retransmission of the data that fails to be sent in a case that the logical channel LCH corresponding to one RLC PDU in the MAC PDU is configured with data retransmission disabling;
starting, in a case that the logical channel LCH corresponding to one RLC PDU in the MAC PDU is configured with HARQ feedback enabling, the HARQ feedback for received data;
starting, in a case that the logical channel LCH corresponding to one RLC PDU in the MAC PDU is configured with data retransmission enabling, the retransmission of the data that fails to be sent;
starting, in a case that the logical channel LCH corresponding to more than or equal to m RLC PDUs in the MAC PDU is configured with HARQ feedback enabling, the HARQ feedback for received data, wherein m is an integer greater than 1, and one MAC PDU comprises a plurality of cascaded RLC PDUs;
starting, in a case that the logical channel LCH corresponding to more than or equal to m RLC PDUs in the MAC PDU is configured with data retransmission enabling, the retransmission of the data that failed to be sent, wherein m is an integer greater than 1, and one MAC PDU comprises the plurality of cascaded RLC PDUs;
allowing data of the logical channel LCH whose HARQ feedback is enabled to be multiplexed on one MAC PDU, and multiplexing data of the logical channel LCH whose HARQ feedback is disabled on one MAC PDU;
allowing data of the logical channel LCH whose data retransmission is enabled to be multiplexed on one MAC PDU, and multiplexing data of the logical channel LCH whose data retransmission is disabled on one MAC PDU.

28. The service transmission method according to claim 26, wherein the determining, according to whether the logical channel and/or HARQ process corresponding to the radio resource control RLC PDU is configured with enabling or disabling of HARQ feedback and/or retransmission, whether to start HARQ feedback and/or retransmission of data that fails to be sent, comprises:
sending, by an RLC entity, in a case that one RLC SDU is divided into at least two RLC PDUs for transmission, a notification message to a MAC entity, wherein the notification message is configured to indicate that at least two RLC PDUs belong to one RLC SDU.

29. The service transmission method according to claim 26, wherein the determining, according to whether the logical channel and/or HARQ process corresponding to the radio resource control RLC PDU is configured with enabling or disabling of HARQ feedback and/or data retransmission, whether to start HARQ feedback and/or retransmission of data that fails to be sent, comprises:
notifying, by the network device, the terminal of characteristic for enabling or disabling of HARQ feedback and/or data retransmission of the configured logical channel and/or HARQ process through RRC signaling and/or MAC CE.

30. The service transmission method according to claim 29, wherein the characteristic for enabling or disabling of HARQ feedback and/or data retransmission of the configured logical channel and/or HARQ process comprises:
time information for enabling or disabling of HARQ feedback and/or data retransmission of the configured logical channel and/or HARQ process, wherein the time information comprises duration time, start time and/or end time.

31. A service transmission method, applied to a terminal, wherein the method comprises:
receiving, through a multicast channel or a unicast channel, data sent by a network device;
parsing the data through a PDCP entity to obtain the parsed data, wherein the multicast channel and the unicast channel correspond to the same PDCP entity, and the PDCP entity is a PDCP entity configured for a broadcast/multicast service.

32. The service transmission method according to claim 31, wherein the method further comprises:
receiving, through the unicast channel, retransmission data sent by a media access control (MAC) entity of the network device through a physical layer (PHY) entity.

33. The service transmission method according to claim 32, wherein the multicast channel comprises: a first radio link control (RLC) entity, a first MAC entity and a first physical layer (PHY) entity.

34. The service transmission method according to claim 33, wherein the unicast channel comprises: a second radio link control (RLC) entity, a second MAC entity and a second physical layer (PHY) entity.

35. The service transmission method according to claim 34, wherein the first MAC entity and the second MAC entity share one MAC entity.

36. The service transmission method according to claim 34 or 35, wherein the receiving, through the unicast channel, retransmission data sent by the media access control (MAC) entity of the network device through the physical layer (PHY) entity comprises:
receiving, through the second PHY entity and the second MAC entity, the retransmission data sent by the network device.

37. The service transmission method according to claim 36, wherein the method further comprises:
determining, in a case that the terminal is configured with HARQ feedback enabling or disabling, whether to start retransmission of lost data according to HARQ feedback enabling or disabling configuration corresponding to radio resource control RLC PDU and scheduling of the network device.

38. The service transmission method according to claim 37, wherein the determining whether to start retransmission of lost data according to HARQ feedback enabling or disabling configuration corresponding to radio resource control RLC PDU and scheduling of the network device, comprises:
not performing, in a case that a logical channel LCH corresponding to one RLC PDU in the MAC PDU is configured with HARQ feedback disabling, a retransmission on the lost data; or,
performing, in a case that the logical channel LCH corresponding to one RLC PDU in the MAC PDU is configured with HARQ feedback enabling, the retransmission on the lost data according to the scheduling of the network device; or,
performing, in a case that the logical channel LCH corresponding to more than or equal to m RLC PDUs in the MAC PDU packet is configured with HARQ feedback enabling, the retransmission on the lost data according to the scheduling of the network device, wherein m is an integer greater than 1, and one MAC PDU comprises a plurality of cascaded RLC PDUs; or,
allowing data of the logical channel LCH whose HARQ feedback is enabled to be multiplexed on one MAC PDU, and multiplexing data of the logical channel LCH whose HARQ feedback is disabled on one MAC PDU.

39. A service transmission apparatus, applied to a network device, and the apparatus comprises:
a transceiving module, configured to receive, on the basis of packet data convergence protocol (PDCP) entity configured for a broadcast/multicast service, data corresponding to at least one quality of service (QoS) flow of the broadcast/multicast service; transmitting, through a multicast channel corresponding to the PDCP entity, data corresponding to at least one QoS flow to a plurality of target terminals, and/or transmitting, through a unicast channel corresponding to the PDCP entity, data corresponding to the at least one QoS flow to one target terminal.

40. A network device comprises:
a transceiver, configured to receive, on the basis of packet data convergence protocol (PDCP) entity configured for a broadcast/multicast service, data corresponding to at least one quality of service (QoS) flow of the broadcast/multicast service; transmitting, through a multicast channel corresponding to the PDCP entity, data corresponding to at least one QoS flow to a plurality of target terminals, and/or transmitting, through a unicast channel corresponding to the PDCP entity, data corresponding to the at least one QoS flow to one target terminal.

41. A service transmission apparatus, applied to a terminal, wherein the apparatus comprises:
a transceiving module, configured to receive, through a multicast channel or a unicast channel, data sent by a network device; and
a processing module, configured to parse the data through a PDCP entity to obtain the parsed data, wherein the multicast channel and the unicast channel correspond to the same PDCP entity, and the PDCP entity is a PDCP entity configured for a broadcast/multicast service.

42. A terminal comprises:
a transceiver, configured to receive, through a multicast channel or a unicast channel, data sent by a network device; and
a processor, configured to parse the data through a PDCP entity to obtain the parsed data, wherein the multicast channel and the unicast channel correspond to the same PDCP entity, and the PDCP entity is a PDCP entity configured for a broadcast/multicast service.

43. A communication device, comprising: a processor, a memory storing a computer program, when the computer program is run by the processor, the method according to any one of claims 1 to 20 or the method according to any one of claims 21 to 25 or the method according to any one of claims 26 to 30 or the method according to any one of claims 31 to 38 is executed.

44. A computer-readable storage medium, comprising instructions, when the instructions are run on a computer, the computer is enabled to execute the method according to any one of claims 1 to 20 or the method according to any one of claims 21 to 25 or the method according to any one of claims 26 to 30 or the method according to any one of claims 31 to 38.
